Europäisches Patentamt

European Patent Office

Office européen des brevets

(11) Veröffentlichungsnummer: **0 075 323**
**B1**

# (12) EUROPÄISCHE PATENTSCHRIFT

(45) Veröffentlichungstag der Patentschrift:
**12.09.84**

(21) Anmeldenummer: **82108722.8**

(22) Anmeldetag: **21.09.82**

(51) Int. Cl.³: **F 16 K 11/06, F 16 K 3/02**

(54) Dichtungsanordnung für den Anschluss von Keramikventilgliedern.

(30) Priorität: **23.09.81 DE 3137774**

(43) Veröffentlichungstag der Anmeldung:
**30.03.83 Patentblatt 83/13**

(45) Bekanntmachung des Hinweises auf die Patenterteilung:
**12.09.84 Patentblatt 84/37**

(84) Benannte Vertragsstaaten:
**AT BE CH DE FR GB IT LI LU NL SE**

(56) Entgegenhaltungen:
**DE - A - 2 841 998**
**DE - A - 2 907 978**
**US - A - 3 667 503**

(73) Patentinhaber: **FRIEDRICH GROHE ARMATURENFABRIK GmbH & CO, Hauptstrasse 137, D-5870 Hemer 1 (DE)**

(72) Erfinder: **Herring, William Peter, Unter dem Asenberg 30, D-5870 Hemer (DE)**

ACTORUM AG

## Beschreibung

Die Erfindung betrifft eine Dichtungsanordnung mit den im Oberbegriff des Anspruchs 1 angegebenen Merkmalen. Bei Ventilen mit Keramikventilgliedern ist es bekannt, die Anschlussdichtungen als separate Elemente in einem besonders ausgebildeten Bodenteil eines kartuschenartigen Gehäuses, welches in Armaturen mit Zu- und Ablaufkanälen einsetzbar ist, zu haltern. Auch ist es bekannt, den Bodenteil des Kartuschengehäuses so auszubilden, dass einerseits zwischen Boden und Keramikventilglied ein Satz Dichtungen und andererseits zwischen Boden und Armatur ein zweiter Satz Dichtungen angeordnet werden können.

Diese bekannten Dichtungsanordnungen erfordern jeweils ein besonderes Bodenteil des Kartuschengehäuses, welches, um z.B. den Ein- und Ausbau in den Armaturen zu erleichtern, mit dem Kartuschengehäuse mittels Verschweissung, Schnappglieder oder Kraftschluss verbunden ist. Ausserdem zeigen die DE-A- 2.841.998 und die US-A-3.667.503 eine Dichtungsanordnung mit den im Oberbegriff des Anspruches 1 genannten Merkmalen. Die vorgenannten Dichtungen haben zwei Funktionen, nämlich einerseits eine sichere Abdichtung zu gewährleisten und andererseits Fertigungstoleranzen, die unvermeidlich bei der Herstellung der einzelnen Ventilelemente und des Gehäuses auftreten, auszugleichen und die Keramikventilelemente mit einer bestimmten Vorspannung zusammenzupressen. Verursacht von dem Toleranzausgleich für die Einzelteile kommt es daher häufig zu einer erhöhten Anpressung der Keramikglieder, was zu einer unerwünschten Schwergängigkeit des Ventils führt.

Der Erfindung liegt die Aufgabe zugrunde, eine verbesserte Dichtungsausbildung für Ventile der eingangs aufgeführten Gattung zu schaffen.

Diese Aufgabe wird erfindungsgemäss durch die im kennzeichnenden Teil des Anspruchs 1 angegebenen Merkmale gelöst. Weitere Ausgestaltungen der Erfindung sind in den Ansprüchen 2 bis 5 angegeben.

Die mit der Erfindung erzielten Vorteile bestehen insbesondere darin, dass das Keramikelement mit der Dichtung einstückig, z.B. durch Aufvulkanisieren, herstellbar ist. Die bisher erforderlichen separaten Dichtungen sowie die zum Halten oder Stützen der Dichtungen erforderlichen Teile können entfallen. Ausserdem kann in einfacher Weise die auf dem Keramikglied unmittelbar ausgebildete Dichtung als Formdichtung (Lippendichtung) gestaltet werden, so dass die durch die Fertigungstoleranzen verursachte unterschiedliche Anpressung der Keramikventilelemente zumindest wesentlich vermindert wird.

Durch die erfindungsgemässen Massnahmen kann darüber hinaus die gesamte Ventilkartuschenausbildung vereinfacht werden, wobei insbesondere auch die Montage der Kartusche erleichtert wird, so dass eine besonders kostengünstige Ausführung erreicht werden kann.

Ein Ausführungsbeispiel der Erfindung ist in der Zeichnung dargestellt und wird im folgenden näher beschrieben. Es zeigen

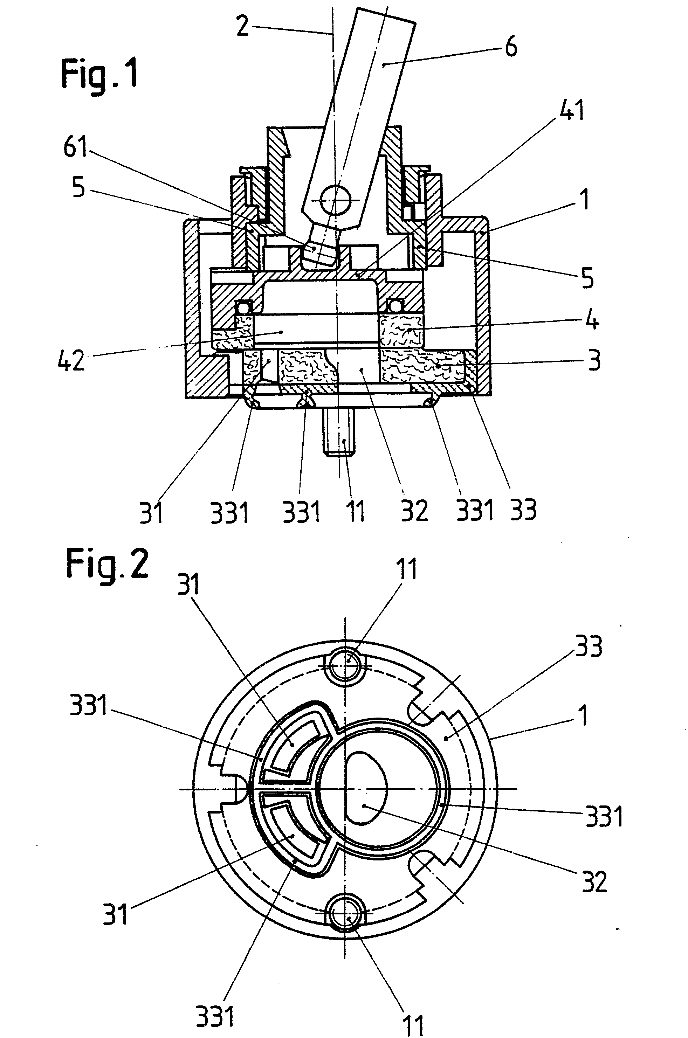

Fig. 1 eine Mischenventilkartusche für Sanitärarmaturen im Längsschnitt;

Fig. 2 die Mischventilkartusche gemäss Fig. 1 in Ansicht von unten.

In einem zylindrischen Kartuschengehäuse 1, welches in eine entsprechende Aufnahmebohrung in Sanitärarmaturen (in der Zeichnung nicht dargestellt) eingesetzt und mit Spannschrauben 11 befestigt werden kann, befindet sich quer zur Längsachse 2 ein im Kartuschengehäuse 1 feststehend gehaltertes Oxidkeramikventilglied 3 mit zwei Einlassöffnungen 31 für das kalte und warme Wasser und einer Auslassöffnung 32 für das Mischwasser. An der stromaufwärts gelegenen Stirnseite des Oxidkeramikventilgliedes 3 ist eine Dichtung 33 aufvulkanisiert, die sich auch zum Teil über die Mantelfläche des Gliedes erstreckt. An der von dem Oxidkeramikventilglied abgekehrten Seite der Dichtung 33 sind im Bereich der Einlass- und Auslassöffnungen 31, 32 axial vorstehende Dichtlippen 331 angeformt, die einen Ausgleich der Fertigungstoleranzen der einzelnen Kartuschenteile ermöglichen, ohne dass eine unerwünscht starke Pressung zwischen dem Oxidkeramikventilglied 3 und einem anschliessenden, verschieb- und/oder verdrehbaren, ebenfalls aus Oxidkeramik bestehenden Regelglied 4 auftritt.

Das Kartuschengehäuse 1 ist im wesentlichen als zylindrische Hülse ausgebildet und trägt an der vom Oxidkeramikventilglied 3 abgekehrten Stirnseite ein koaxial angeordnetes Drehglied 5, in dem ein quer zur Längsachse 2 verschwenkbar gelagerter zweiarmiger Hebel 6 angeordnet ist. Der eine Hebelarm ist dabei mit einem Zapfen 61 an ein Führungsglied 41 für das Regelglied 4 verbunden, während der andere Hebelarm mit einem Betätigungsgriff (in der Zeichnung nicht dargestellt) verbunden wird. Das Führungsglied 41 ist darüber hinaus in einer Radialführung von dem Drehglied 5 gehalten, so dass durch ein Verdrehen des Hebels 6 das Regelglied 4 über das Drehglied 5 entsprechend verdreht wird oder durch ein Verschwenken des Hebels 6 radial in der Führung des Drehgliedes 5 verschoben wird. Durch eine entsprechende Anordnung der Einlass- und Auslassöffnungen 31, 32 in dem Oxidkeramikventilglied 3 und der Zuordnung eines Überströmkanals 42 in dem Regelglied 4 kann durch eine Drehung des Hebels 6 das Mischungsverhältnis und durch ein Verschwenken des Hebels 6 die Durchflussmenge, die das Ventil durchströmt, bestimmt werden.

Selbstverständlich kann die Dichtungsanordnung z.B. auch bei Mengenregulierventilen mit einer oder mehreren Einlassöffnungen verwirklicht werden.

### Patentansprüche

1. Dichtungsanordnung für Ventile, insbesondere für den Sanitärbereich, mit Keramikventilgliedern (3, 4), wobei als Ventilsitz ein im Ventilgehäuse (1) ortsfestes Keramikventilglied (3) gehaltert, mittels einer elastischen Dichtung (33) abgedichtet und über eine oder mehrere im Keramikventilglied (3) angeordnete Durchtrittsöffnungen (31, 32) mit entsprechenden Zu- und/oder Ablaufkanälen verbunden ist, dadurch gekennzeichnet, dass die Dichtung (33) unmittelbar an dem Keramikventilglied (3) befestigt ist.

2. Dichtungsanordnung nach Anspruch 1, dadurch gekennzeichnet, dass die Dichtung (33) an dem Oxidkeramikventilglied (3) aufvulkanisiert ist.

3. Dichtungsanordnung nach den Ansprüchen 1 und 2, dadurch gekennzeichnet, dass die Dichtung (33) wenigstens eine Stirnseite des Oxidkeramikventilgliedes (3) bedeckt.

4. Dichtungsanordnung nach den Ansprüchen 1 bis 3, dadurch gekennzeichnet, dass die Dichtung (33) eine Stirnseite sowie wenigstens einen Teil der Mantelfläche des Oxidkeramikventilgliedes (3) umfasst.

5. Dichtungsanordnung nach den Ansprüchen 1 bis 4, dadurch gekennzeichnet, dass die Dichtung (33) als Formdichtung ausgebildet ist, die an der von dem Oxidkeramikventilglied (3) abgekehrten Seite axial vorstehende Dichtlippen (331) trägt.

## Claims

1. Sealing arrangement for valves, particularly for sanitary applications, with ceramic valve elements (34), wherein, as the valve seat, a fixed ceramic valve element (3) is mounted in the valve housing (1), sealed by means of an elastic seal (33) and connected via one or more passages (31, 32) arranged in the ceramic valve element (3) to corresponding inlet and/or outlet passages, characterised in that the seal (33) is fixed directly to the ceramic valve element (3).

2. Sealing element according to Claim 1, characterised in that the seal (33) is vulcanised onto the oxide ceramic valve element (3).

3. Sealing arrangement according to Claims 1 and 2, characterised in that the seal (33) covers at least one end face of the oxide ceramic valve element (3).

4. Sealing device according to Claims 1 to 3, characterised in that the seal (33) surrounds one end face and at least a part of the surface of the sleeve of the oxide ceramic valve element (3).

5. Sealing arrangement according to Claims 1 to 4, characterised in that the seal (33) is in the form of a moulded seal which on the side facing away from the oxide ceramic valve element (3) has axially projecting sealing lips (331).

## Revendications

1. Dispositif d'étanchéité pour vanne, en particulier pour appareil sanitaire, dont les éléments de vanne (3, 4) sont en céramique et où un élément de vanne en céramique (3), maintenu fixe dans le corps de vanne (1) et servant de siège de vanne, est relié, avec une étanchéité procurée par une garniture élastique, par un ou plusieurs orifices d'écoulement (31, 32) aménagés dans l'élément de vanne en céramique (3), à des canaux d'arrivée et/ou de sortie correspondants, caractérisé en ce que la garniture (33) est directement fixée sur l'élément de vanne en céramique (3).

2. Dispositif d'étanchéité selon la revendication 1, caractérisé en ce que la garniture (33) est vulcanisée sur l'élément de vanne en céramique d'oxydes.

3. Dispositif d'étanchéité selon les revendications 1 et 2, caractérisé en ce que la garniture (33) recouvre au moins une face avant de l'élément de vanne en céramique d'oxydes.

4. Dispositif d'étanchéité selon les revendications 1 à 3, caractérisé en ce que la garniture (33) recouvre une face avant ainsi qu'une partie au moins de la surface latérale de l'élément de vanne en céramique d'oxydes.

5. Dispositif d'étanchéité selon les revendications 1 à 4, caractérisé en ce que la garniture (33) a une forme profilée et porte des lèvres d'étanchéité (331) faisant saillie axialement sur le côté opposé à l'élément de vanne en céramique d'oxydes.

0 075 323

Fig.1

Fig.2